Europäisches Patentamt

European Patent Office

Office européen des brevets

(19)

(11) **EP 1 542 372 A1**

(12) **EUROPEAN PATENT APPLICATION**
published in accordance with Art. 158(3) EPC

(43) Date of publication:
**15.06.2005 Bulletin 2005/24**

(51) Int Cl.⁷: **H04B 1/707**

(21) Application number: **03791409.0**

(22) Date of filing: **29.08.2003**

(86) International application number:
**PCT/JP2003/011018**

(87) International publication number:
**WO 2004/021598 (11.03.2004 Gazette 2004/11)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.08.2002 JP 2002255406**

(71) Applicants:
• **Yokohama TLO Company, Ltd.**
  **Yokohama-shi, Kanagawa 240-8501 (JP)**

• **Suehiro, Naoki**
  **Tsukuba-shi, Ibaraki 305-0031 (JP)**

(72) Inventor: **SUEHIRO, Naoki**
  **Tsukuba-shi, Ibaraki 305-0031 (JP)**

(74) Representative: **Strehl Schübel-Hopf & Partner**
  **Maximilianstrasse 54**
  **80538 München (DE)**

(54) **TRANSMISSION SIGNAL FORMATION METHOD, COMMUNICATION METHOD, AND TRANSMISSION SIGNAL DATA STRUCTURE**

(57) A coefficient sequence of a spreading sequence is sequentially shifted one pitch at a time, transmission data is multiplied by a plurality of coefficient sequences to produce a plurality of transmission data, and the plurality of produced transmission data are added up to produce a transmission data sequence. Alternatively, the coefficient sequence of the spreading sequence is multiplied by the transmission data, the result is sequentially shifted one pitch at a time, and a plurality of transmission data are added up to produce a transmission data sequence. Transmission data is multiplied by the coefficient sequence of a spreading sequence to produce a finite-length signal and this finite-length signal is repeated an infinite number of times to produce an infinite-length signal. Transmission data, which is longer than the coefficient sequence, is cut out from this infinite-length signal to produce a transmission data sequence. This makes it possible to include transmission data into a spreading sequence and, therefore, when the transmission data is modulated through spread spectrum, an increase in the amplitude of a signal is reduced and the dynamic range of an amplifier on the receiving side is reduced.

Fig. 1

Printed by Jouve, 75001 PARIS (FR)

**Description**

TECHNICAL FIELD

The present invention relates to a transmission signal production method, a communication method using the transmission signal, and a data structure of the transmission signal and, more particularly, is advantageous to a multi-path environment such as that of mobile communication.

BACKGROUND ART

As a demand for data communication is increased in cellular wireless communication and various mobile environments , there is a need for a technology that increases the utilization of wireless frequency resources. For example, in the communication method using the CDMA method, the correlation characteristics of a spreading sequence and the inter-channel interference due to the multi-path characteristics of a transmission path are factors that limit the frequency utilization.

Because the method using Orthogonal Frequency Division Multiplexing (OFDM) is frequency multiplexing using a sine wave, the effect of a multi-path appears as the fading of a signal power and, therefore, there is a problem that it is difficult to separate a transmitted sine wave signal from a multi-path sine wave signal.

On the other hand, the CDMA method can use a pilot signal to separate a transmission signal from a multi-path signal transmitted at the same frequency and at the same time.

The CDMA method is a multiple access method using the spread spectrum communication method. In this spread spectrum communication method,modulation is performed using a spreading code sequence. For example, a periodic sequence with no autocorrelation is used as the spreading code sequence.

As a spreading code sequence that separates the original transmission signal from a multi-path signal, a communication method such as the one using a complete complementary sequence is proposed. The complete complementary sequence is a sequence having the auto-correlation characteristics where the sum of the auto-correlation function of the sequences is 0 for all shifts except the 0-shift and the cross-correlation characteristics where the sum of the cross-correlation function of the sequences is always 0 for all shifts. A complete complementary sequence is used to produce a ZCZ(Zero-Correlation-Zone)-CDMA signal, free of a side lobe and an inter-channel interference, to make the periodic spectrum of the transmission signal a non-correlation spectrum. This makes it possible to allocate the same frequency and the same time to the pilot signal and the transmission signal.

The problem with the spread spectrum communication method, which uses a conventionally proposed complete complementary sequence, is that the amplitude of a digitally modulated wireless signal is increased and a large dynamic range is required.

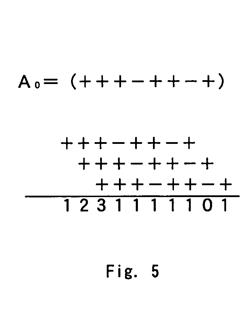

FIG. 5 shows an example of a signal that uses a complete complementary sequence as the spreading code sequence. The signal sequence A0 (=+++-++-+) is an example of a binary signal generated using a complete complementary sequence. In this example, "+" represents a "1", and "-" represents a "-1".

When the multi-path characteristics affect the received signal of this example and a delay time is caused, the received signal transmitted via multi-path transmission lines is received as the signal sequence of "1, 2, 3, 1, 1, 1,...". The increase in the amplitude of this signal is, for example, from 0 to 3, and the receiving side amplifier must have a dynamic range for this increase in the amplitude.

If a dynamic range enough for this increase in the amplitude cannot be accommodated, the output signal is distorted by the non-linearity of the input/output characteristics of the amplifier, a frequency spectrum is generated also in a bandwidth other than that of the input signal, and the spurious characteristics are degraded. In addition, a distortion in the output waveform generates an inter-symbol interference on the receiving side and degrades the error rate. Amplifying the signal using the good linearity part of the amplifier increases the power consumption of the amplifier. An increase in the power consumption results in a decrease in the standby time of a mobile terminal.

In view of the foregoing, it is an object of the present invention to solve the conventional problems described above, to reduce an increase in the amplitude of the signal during the modulation of transmission data through spread spectrum, and to reduce the dynamic range of an amplifier on the receiving side.

DISCLOSURE OF THE INVENTION

When transmission data is modulated via spread spectrum, a spreading sequence itself is processed in the prior art to make the periodic spectrum of a transmission signal a non-correlated spectrum. By contrast, when transmission data is modulated via spread spectrum according to the present invention, not the spreading sequence itself is processed as in the prior art but a transmission data sequence is processed to make the periodic spectrum of the transmission signal a non-correlated spectrum. Making the periodic spectrum of the transmission signal a non-correlated spectrum reduces an increase in the amplitude of a signal and reduces the dynamic range of an amplifier on the receiving side.

The method according to the present invention includes transmission data into a spreading sequence to allow a whole signal, which includes the data, to function as a spreading sequence, thereby reducing the dynamic range load.

In a first mode of the transmission signal production method according to the present invention, a coefficient sequence of a spreading sequence is sequentially shifted one pitch at a time, transmission data is multiplied by the plurality of coefficient sequences to produce a plurality of transmission data, and the plurality of produced transmission data are added up to produce a transmission data sequence. Alternatively, the coefficient sequence of the spreading sequence is multiplied by the transmission data, the result is sequentially shifted, one pitch at a time, to produce a plurality of transmission data, and the plurality of produced transmission data are added up to produce a transmission data sequence.

In a second mode of the transmission signal production method according to the present invention, transmission data is multiplied by a coefficient sequence of a spreading sequence to produce a finite-length signal and this finite-length signal is repeated an infinite number of times to produce an infinite-length signal. Transmission data, which is longer than the coefficient sequence, is cut out from this infinite-length signal to produce a transmission data sequence. In the first or second mode of transmission signal production described above, transmission data is included into the spreading sequence.

In another mode of the transmission signal production method according to the present invention, a plurality of transmission data sequences are produced using different coefficient sequences when the first or second mode of the transmission signal production method described above is used for producing a transmission data sequence and, in an arbitrary combination of two different transmission data sequences, a periodic cross-coefficient function of the transmission data of the transmission data sequences is 0 for all shifts. The plurality of transmission data sequences are transmitted in parallel so that the periodic spectrums of the transmission data sequences have no correlation.

The coefficient sequence used for the transmission signal production according to the present invention can be selected from a ZCZ sequence, can be a coefficient sequence of any vector row selected from a complete complementary sequence, and can be produced using a DFT matrix.

The ZCZ sequence used here is a sequence having a periodic zero correlation zone that has the zero auto-correlation zone characteristics and zero cross-correlation zone characteristics. For example, a complete complementary sequence can be used as the predetermined coefficient sequence. A complete complementary sequence is a sequence having the auto-correlation characteristics where the sum of the auto-correlation function of the sequences is 0 for all shifts except 0 shift and the cross-correlation characteristics where the sum of the cross-correlation function of the sequences is always 0 for all shifts.

A DFT matrix is a discrete Fourier transform matrix and is a square matrix having orthonormal columns. The nature of different rows of a DFT matrix is that the periodic cross-correlation function is zero for all shifts and, therefore, the periodic cross function of the signals, produced using different rows of a DFT matrix using this nature of the DFT matrix, can have the value of zero for all shifts. The present invention uses this nature of a DFT matrix to allow a plurality of signals to be transmitted at the same time without causing a mutual interference among periodic signals.

The communication method according to the present invention comprises the steps of transmitting the transmission data sequence produced in accordance with the transmission signal production method of the present invention and receiving transmission data via a matched filter corresponding to the coefficient sequence used for the production of the transmission data sequence.

According to the communication method of the present invention, the transmission data sequence is used as a pilot signal for measuring multi-path characteristics, and the multi-path characteristics of a transmission path can be obtained by receiving this pilot signal.

In another mode of the communication method of the present invention, a plurality of transmission data sequences are produced using different coefficient sequences and at least one transmission data sequence selected from the transmission data sequences is used as the pilot signal with other transmission data sequences used as transmission signals. The multi-path characteristics are obtained from the reception signal of the pilot signal, and the multi-path characteristics are removed from the reception signal of the transmission signal using the multi-path characteristics, which are found, to produce transmission data.

The periodic spectrums of the pilot signal and the transmission signals have no correlation and, by passing them thorough the corresponding matched filters , each signal can be separated. The multi-path characteristics of the pilot signal can be obtained from the relation between the transmission signal and the reception signal, and the transmission signals can be obtained from the multi-path characteristics and the reception signals.

The data structure of a transmission signal according to the present invention comprises a transmission data sequence produced by cutting out transmission data, which is longer than the coefficient sequence, from an infinite-length signal produced by repeating a finite-length signal, produced by multiplying transmission data by the coefficient sequence of a spreading sequence, an infinite number of times.

BRIEF DESCRIPTION OF THE DRAWINGS

FIG. 1 is a general diagram showing a transmission signal production method according to the present invention and the data structure of a transmission signal according to the present invention; FIG. 2 is a diagram showing the coefficients of a fourth order DFT matrix; FIG. 3 is a diagram showing the relation between a pilot signal and transmission signals; FIG. 4 is a diagram showing the relation and correlation between transmission signals and detected signals; and FIG. 5 is a diagram showing an example of a signal that uses a complete complementary sequence as the spreading code sequence..

BEST MODE FOR CARRYING OUT THE INVENTION

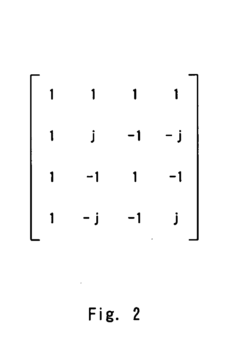

A transmission signal production method, a communication method, and the data structure of a transmission signal in the best mode for carrying out the present invention will be described below with reference to the drawings.
The following describes embodiments of the present invention in detail with reference to the drawings.

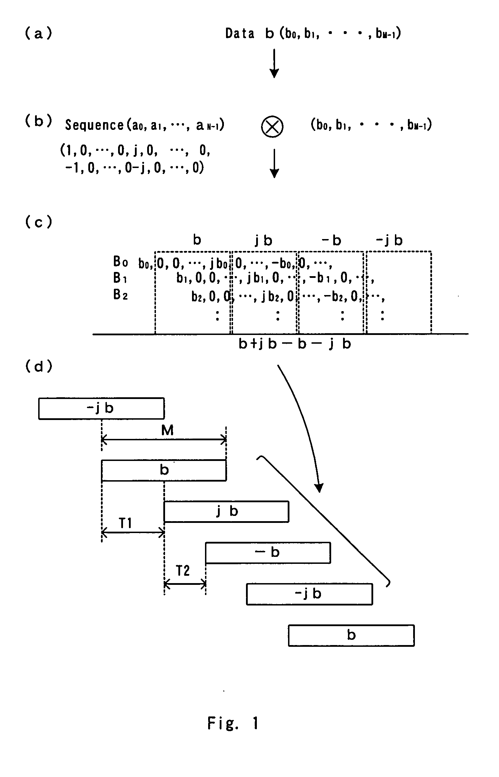

FIG. 1 is a general diagram showing a transmission signal production method of the present invention and the data structure of a transmission signal of the present invention.
According to the present invention, a transmission data sequence (shown in FIG. 1(c, d)) is produced from transmission data b (=(b0, b1, b2, b3, ..., bM-1)) (shown in FIG. 1(a)) using a spreading sequence (sequence a(= (a0, a1, ..., aN-1) in FIG. 1(b)), and this transmission data sequence is used as a transmission signal. The length of the spreading sequence is N bits, and the data length of the transmission data b is M bits.
To produce the transmission data sequence B from the transmission data b (b0, b1, b2, b3, ..., bM-1) (shown in FIG. 1(a)), the transmission data (b0, b1, b2, b3, ..., bM-1) is multiplied by the coefficients of the coefficient sequence (a0, a1, ..., aN-1) of the predetermined spreading sequence (shown in FIG. 1(b)) to produce a plurality of transmission data sequence B0, B1, ...,BM-1.
FIG. 1 shows an example of the coefficient sequence (a0, a1, ... , aN-1) of a spreading sequence, that is, (1, 0, ..., 0, j, 0, ..., 0, -1, 0, ..., 0, -j, 0, ..., 0). When the coefficient sequence of this spreading sequence is applied to the transmission data b (b0, b1, b2, b3, ..., bM-1), transmission data B0 becomes (b0, 0, ..., 0, jb0, 0, ..., 0, -b0, 0, ..., 0, -jb0, 0, ..., 0) and transmission data B1 becomes (b1, 0, ..., 0, jb1, 0, ..., 0, -b1, 0, ...,0, -jb1, 0, ..., 0). The other transmission data is also processed in the same manner. The processing in which the transmission data b (=(b0, b1, b2 , b3, ..., bN-1)) is multiplied by the coefficients of the coefficient sequence(a0, a1, ..., aN-1) of the predetermined spreading sequence is represented by the Kronecker product as shown in FIG. 1(b).
Next, as shown in FIG. 1(c), a plurality of transmission data B0, B1, B2, ... , produced by multiplying them by the coefficients, are delayed each for one pitch and then added up to produce the data sequence B (= b + jb - b - jb). In addition, data is added before and after this data sequence B to produce a finite-length periodic sequence. FIG. 1 (d) shows a finite-length periodic sequence. As shown in FIG. 1(d), this finite-length periodic sequence is produced by adding the ending data sequence (jb) of the data sequence B to the start of the data sequence B (=b + jb - b -jb) and by adding the starting data sequence (-jb) of the data sequence B to the end of the data sequence B.
The intervals among the data sequences b, jb, -b, and -jb of the data sequence B can be determined arbitrarily according to the intervals among the coefficients of the sequence a (for example, T1, T2, ...).
The spreading sequence can be produced by using a DFT matrix. FIG. 2 shows the coefficients of a fourth order DFT matrix.
The following describes an example of a spreading sequence of a fourth order DFT matrix.
When the transmission data is (1, 0, 0, 0) and the coefficient sequences (1, 1, 1, 1), (1, j, -1, -j), (1, -1, 1, -1), and (1, -j, -1, j) of the rows of the DFT matrix are applied to the transmission data (1, 0, 0 , 0), the periodic sequences A - D can be represented by the Kronecker products as shown by expression (1) given below.

$$A = (1, 1, 1, 1)$$

$$\otimes (1, 0, 0, 0)$$

$$B = (1, j, -1, -j)$$

$$\otimes (1, 0, 0, 0)$$

$$c = (1, -1, 1, -1) \dots (1)$$

$$\otimes (1, 0, 0, 0) \qquad (1)$$

$$D = (1, -j, -1, j)$$

$$\otimes (1, 0, 0, 0)$$

In the expression (1) given above, the periodic sequence A is expressed as follows:

$$A = (1, 0, 0, 0, 1, 0, 0, 0,$$

$$1, 0, 0, 0, 1, 0, 0, 0)$$

The periodic sequence B is expressed as follows:

$$B = (1, 0, 0, 0, j, 0, 0, 0,$$

$$-1, 0, 0, 0, -j, 0, 0, 0)$$

The periodic sequence C is expressed as follows:

$$C = (1, 0, 0, 0, -1, 0, 0, 0,$$

$$1, 0, 0, 0, -1, 0, 0, 0)$$

The periodic sequence D is expressed as follows:

$$D = (1, 0. 0, 0, -j, 0, 0, 0,$$

$$-1, 0, 0, 0, j, 0, 0, 0)$$

For example, a data sequence of a finite-length periodic sequence A' can be produced by adding the ending data sequence (1, 0, 0, 0) and the starting data sequence (1, 0, 0, 0) of the periodic sequence A before and after the periodic sequence A.

$$A' = (1, 0, 0, 0, A, 1, 0, 0, 0)$$

The data length of this periodic sequence A' is the data length 16 bits of the periodic sequence A plus four bits on its both ends, that is, a total of 24 bits. This periodic sequence A' can be obtained by cutting it out from the infinite periodic sequence (...AAAA...) of the periodic sequence A.

The transmission signal whose transmission data is the finite-length periodic sequence A' can be obtained by a matched filter (matched filter) corresponding to the coefficients of a spreading sequence used for the production of the transmission signal. A matched filter, a filter used for de-spreading and obtaining the transmission data A, is produced corresponding to the coefficients of the spreading sequence used for the production of the transmission data A.

The relation between the input signal and a matched filter is determined based on the complete complemetarity of the spreading sequence. For example, when the signal M is passed through the matched filter for the signal M, an impulse-like signal can be obtained due to the auto-correlation characteristics; however, when the signal M is passed through a matched filter other than the matched filter for the signal M, no signal can be obtained due to the cross-correlation characteristics.

Let Af be a matched filter for the signal A. When the signal of the periodic sequence A' is passed through this matched filter Af, the output of the matched filter Af can be represented by the convolution operation shown below. Note that, to maintain the processing compatibility in the matched filter Af , the periodic sequence A' is changed to (A', 1) to increase the signal length by 1 to 25 bits.

$$(A', 1)*Af = 16(x, x, ..., x, x, 1, 0, 0, 0, 1, 0, 0,0,$$

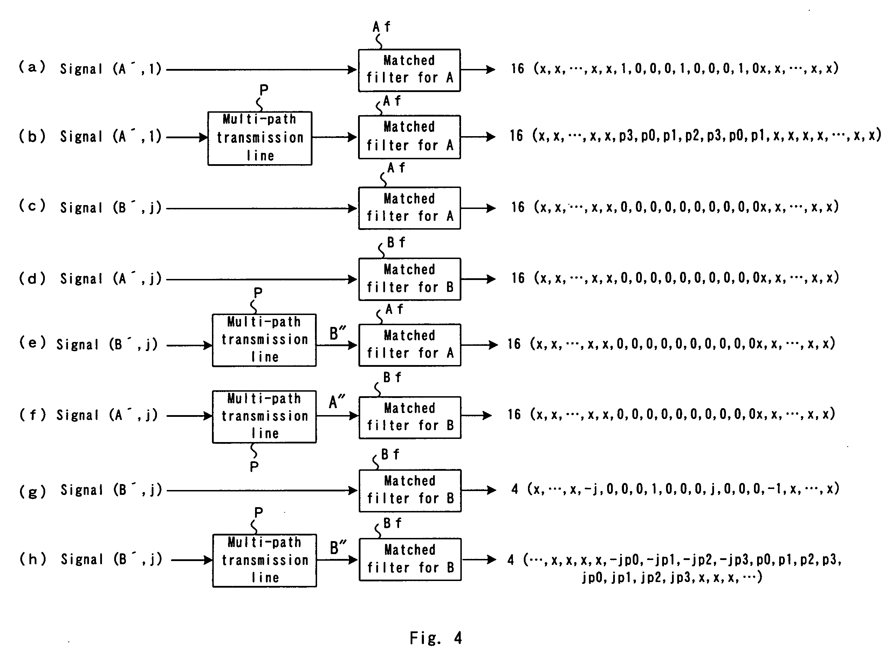

$$1, 0, x, x, ..., x, x) \text{ where, x is a number obtained by the convolution operation (FIG. 4(a)).}$$

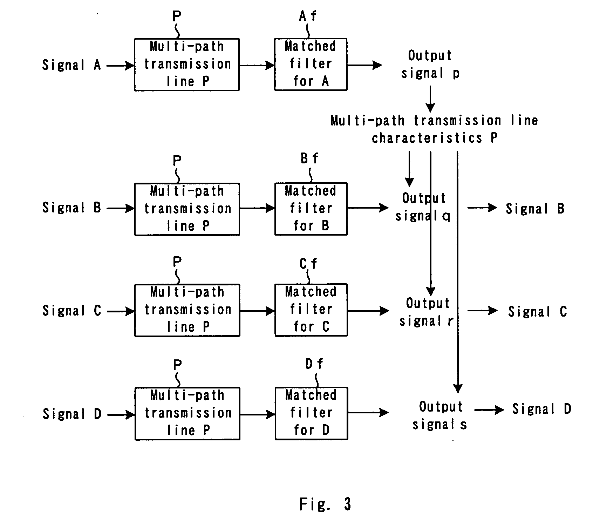

In the communication method according to the present invention, at least one of produced transmission signals can be used as a pilot signal to detect the multi-path characteristics of a multi-path transmission line via which the signal is transmitted and to detect the transmission signal from which the multi-path characteristics are removed. FIG. 3 is a diagram showing the relation between a pilot signal and transmission signals. FIG. 4 is a diagram showing the relation and the correlation between a transmission signal and a detected signal.

For example, in FIG. 3, the signal A is a pilot signal. This signal is transmitted via the multi-path transmission line P and is passed through the matched filter Af for the signal A. Then, the output signal p is produced. From this output signal p, the multi-path characteristics P of the multi-path transmission line can be obtained.

On the other hand, the signal B - signal D are transmission signals. When those signals are transmitted via the same multi-path transmission line P as that of the pilot signal at the same time, they are affected by the same multi-path characteristics of the multi-path transmission line P. Therefore, the output signals q, r, and s, which are received via the matched filters Bf , Cf , and Df, include the same multi-path characteristics. Thus, removing the multi-path characteristics P from the output signals q, r, and s using the multi-path characteristics P obtained from the pilot signal can produce the transmission signal B, transmission signal C, and transmission signal D.

In the description below, the multi-path characteristics are represented as $P=(p0, p1, p2, p3)$. pk is the multi-path factor of the delay time for time slots 0, 1, 2, and 3. The multi-path characteristics P can be obtained, for example, by detecting the pilot signal, which is transmitted via the multi-path transmission line, using the matched filter for the pilot signal.

The signal A described above can be made to correspond to a non-reflective direct path in the multi-path transmission line with the multi-path factor pk corresponding to 1.

Thus, the reception signal A", which is transmitted via a multi-path transmission line with the multi-path characteristics of $P=(p0, p1, p2, p3)$, has a value shown below produced by multiplying the transmission signal (A', 1) described above by the multi-path factor pk.

$$A'' = p0(A', 1, 0, 0, 0) + p1(0, A', 1, 0, 0)$$

$$+ p2(0, 0, A', 1, 0) + p3(0, 0, 0, A', 1)$$

The output obtained by passing this reception signal A" through the matched filter Af is as follow (FIG. 4(b)).

$$A''*Af = 16(x, x, x, ..., x, x, x, p3, p0, p1, p2, p3p0,$$

$$p1, x, x, x, x, ..., x, x)$$

Therefore, when the transmission signal (A' , 1), which is the pilot signal, is transmitted via the multi-path characteristics of $P=(p0, p1, p2, p3)$ to produce a detection output, the multi-path characteristics $P=(p0, p1, p2, p3)$ can be separated and detected from this detection output.

Although, in the above description, an example is shown in which the same transmission signal (1, 0, 0, 0) is applied to the periodic sequences A-D and the transmission data, produced by applying the periodic sequence A, is used as the pilot signal, it is also possible to use a transmission signal for the transmission pilot signal (for example, (1, 1, 1, -1) different from the transmission signal (1, 0, 0, 0) described above) and to use the transmission data, produced by applying the periodic sequence A to this transmission signal, as the pilot signal. In this case, because the transmission data produced from a specific transmission signal is used as the pilot signal, the signal can be obtained as the pilot signal by passing it though the filter corresponding to the pilot signal.

Next, the following describes a case in which a transmission signal is transmitted via a multi-path transmission line.

The periodic sequence B can be expressed as follows from the expression (1) given above.

$$B = (1, 0, 0, 0, j, 0, 0, 0,$$

$$-1, 0, 0, 0, -j, 0, 0, 0)$$

The ending data sequence (-j, 0, 0, 0) and the starting data sequence (1, 0, 0, 0) of the periodic sequence B are added before and after the periodic sequence B to produce a finite-length data sequence of the periodic sequence B'.

$$B' = (-j, 0, 0, 0, B, 1, 0, 0, 0)$$

The data length of this periodic sequence B' is the data length 16 bits of the periodic sequence B plus four bits on its both ends, that is, a total of 24 bits. This periodic sequence B' can be obtained by cutting it out from the infinite periodic sequence (...BBBBB...) of the periodic sequence B.

The transmission signal whose transmission data is the finite-length periodic sequence B' can be obtained by a matched filter (matched filter) corresponding to the coefficients of a spreading sequence used for the production of the transmission signal. A matched filter, a filter used for de-spreading and obtaining the transmission data B, is produced corresponding to the coefficients of the spreading sequence used for the production of the transmission data B.

When the periodic sequence B' is changed to the 25-bit signal (B', j) and is passed through the matched filter Af for the signal A, the following output is obtained.

$$(B', j)*Af = 16(x, x, ..., x, x, 0, 0, 0, 0, 0, 0, 0,$$

$$0, 0, 0, x, x, ..., x, x) \text{ where, } x \text{ is a number obtained by the convolution operation.}$$

When the periodic sequence A' is changed to the 25-bit signal (A', 1) and is passed through the matched filter Bf for the signal B, the following output is obtained.

$$(A', 1)*Bf = 16(x, x, ..., x, x, 0, 0, 0, 0, 0, 0, 0,$$

$$0, 0, 0, x, x, ..., x, x)$$

Therefore, when the time difference between the two signals, signal (A', 1) and signal (B', 1), is limited in the same frequency band, they can be transmitted independently (FIG. 4(c) and FIG. 4(d)).

In the multi-path environment with the multi-path characteristics P, the signal (A', 1) and the signal (B', j) also have no cross-correlation and can be treated independently (FIG. 4(e) and FIG. 4(f)). This means that, because the transmission signals can be treated independently, not only the signal A but also the signal B, C, or D can be used as the pilot signal for detecting the multi-path characteristics.

The fact that there is no cross-correlation can be confirmed as follows.

The transmission signal (A', j) is transmitted via the multi-path transmission line P, and the obtained reception signal A" is detected by the matched filter Bf for the signal B. Then, the output signal is as follows.

$$A''*Bf = (x, x, ..., x, x, 0, 0, 0, 0, 0, 0, 0, 0, 0, 0,$$

$$x, x, ..., x, x)$$

The transmission signal (B', j) is transmitted via the multi-path transmission line P, and the obtained reception signal A" is detected by the matched filter Af for the signal A. Then, the output signal is as follows.

$$B''*Af = (x, x, ..., x, x, 0, 0, 0, 0, 0, 0, 0, 0, 0, 0,$$

$$x, x, ..., x, x)$$

This indicates that both have a non-correlation range in the cross correlation function and therefore they have no cross-correlation.

When the signal (B', j) is transmitted via the multi-path transmission lien P, the reception signal B" is represented as follows.

$$B" = p0(B', j, 0, 0, 0) + p1(0, B', j, 0, 0)$$

$$+ p2(0. 0, B', j, 0) + p3(0, 0, 0, B', j)$$

When the transmission signal (B' , j) is passed through the matched filter Bf at this time, the output signal is obtained by the convolution operation between the transmission signal (B', j) and the matched filter Bf and is represented as follows (FIG. 4(g)).

$$(B', j)*Bf = (x, ..., x, -4j, 0,$$

$$0, 0, 4, 0,$$

$$0, 0, 4j, 0,$$

$$0, 0, -4, x, ..., x)$$

Therefore, when the signal that is transmitted via the multi-path transmission line P is B", the reception signal detected by the matched filter for the signal B can be obtained by the convolution operation between the signal B" and the matched filter B and is represented as follows.

$$B"*Bf$$

$$= 4(..., x, x, x, x, -jp0, -jp1, -jp2, -jp3,$$

$$p0, p1, p2, p3, jp0, jp1, jp2, jp3, x, x, x, x,$$

$$...)$$

where Bf corresponds to the matched filter B.
The multi-path characteristics p0, p1, p2, and p3 can be obtained directly as the output of the matched filter (FIG. 4(h)).
Therefore, the signals A, B, C, and D have no correlation, the periodic cross-correlation function between the signals has a value of 0 for all shifts, and the periodic spectrums of the signals do not overlap.
Next, the following describes the procedure, according to the communication method of the present invention, for collecting transmission data from the reception signal transmitted via a multi-path transmission detour path.
The transmission data b (b0, b1, b2, b3, b4, b5) is processed into the following transmission signal using the spreading sequence signals (B', j, 0, 0, 0, 0), (0, B' , j, 0, 0, 0, 0), (0, 0, B', j, 0, 0, 0), ..., (0, 0, 0, 0, 0, B' , j) produced by shifting the sequence one chip at a time.

$$b0(B', j, 0, 0, 0, 0, 0)$$

$$+b1(0, B', j, 0, 0, 0, 0,)$$

+b2(0, 0, B', j, 0, 0, 0)

...

+b5(0, 0, 0, 0, 0, B', j)

When this transmission signal is transmitted via the multi-path transmission line P and is detected by the matched filter Bf for the signal B, the following output signal is detected.

(x, x, ..., x, x, q0, q1, q2, q3, q4, q5, q6, x, x, ...,

x, x)

The above relation can be represented by the following expression.

$$
\frac{1}{4}
\begin{bmatrix} q_0 \\ q_1 \\ q_2 \\ q_3 \\ q_4 \\ q_5 \\ q_6 \end{bmatrix}
=
\begin{bmatrix}
p_1 & p_0 & -jp_3 & -jp & -jp_1 & -jp_0 \\
p_2 & p_1 & p_0 & -jp_3 & -jp_2 & -jp_1 \\
p_3 & p_2 & p_1 & p_0 & -jp_3 & -jp_2 \\
jp_0 & p_3 & p_2 & p_1 & p_0 & -jp_3 \\
jp_1 & jp_0 & p_3 & p_2 & p_1 & -jp_0 \\
jp_2 & jp_1 & jp_0 & p_3 & p_2 & p_1 \\
jp_3 & jp_2 & jp_1 & jp_0 & p_3 & p_2
\end{bmatrix}
\begin{bmatrix} b_0 \\ b_1 \\ b_2 \\ b_3 \\ b_4 \\ b_5 \end{bmatrix}
$$

Because this relational expression is composed of seven simultaneous equations including six unknowns (b0, b1, b2, b3, b4, b5), the transmission data (b0, b1, b2, b3, b4, b5) can be found using p0-p3 and q0-q6.
P0-p3 can be obtained from the output of the matched filter Af for the signal A, and q0-q6 from the output of the matched filter Bf for the signal B.
As is apparent from the above description, the method according to the present invention includes transmission data into a spreading sequence to allow the whole signal, which includes the data, to function as a spreading sequence. This reduces an increase in the amplitude of the signal and reduces the dynamic range of an amplifier on the receiving side.

INDUSTRIAL APPLICABILITY

The transmission signal production method, communication method, and the data structure of the transmission signal according to the present invention are advantageous and are useful for the multi-path environment of mobile communication.

**Claims**

1. A transmission signal production method comprising the steps of multiplying transmission data by a coefficient sequence of a spreading sequence sequentially shifted one pitch at a time, or multiplying the coefficient sequence of the spreading sequence by the transmission data and sequentially shifting the result one pitch at a time, to produce a plurality of transmission data; and adding up said plurality of transmission data to produce a transmission data sequence.

2. A transmission signal production method comprising the steps of:

   multiplying transmission data by a coefficient sequence of a spreading sequence to produce a finite-length signal;
repeating said finite-length signal an infinite number of times to produce an infinite-length signal; and
cutting out transmission data, which is longer than said coefficient sequence, from said infinite-length signal
to produce a transmission data sequence.

3. The transmission signal production method according to claim 1 or 2 wherein
a plurality of transmission data sequences are produced using different coefficient sequences and
in an arbitrary combination of said plurality of transmission data sequences, a periodic cross-coefficient function of the transmission data of said transmission data sequences is 0 for all shifts.

4. The transmission signal production method according to claim 1 or 2 wherein
a plurality of transmission data sequences are produced using different coefficient sequences and
in an arbitrary combination of said plurality of transmission data sequences, the plurality of transmission data
sequences are transmitted in parallel so that periodic spectrums of the transmission data sequences have no
correlation.

5. The transmission signal production method according to one of claims 1-4 wherein said coefficient sequence is a
row vector of a DFT matrix.

6. A communication method comprising the steps of:

transmitting the transmission data sequence according to one of claims 1-4; and
receiving transmission data via a matched filter corresponding to said coefficient sequence.

7. The communication method according to claim 6 wherein
said transmission data sequence is used as a pilot signal for measuring multi-path characteristics, and
the received signal has multi-path characteristics of a transmission path.

8. The communication method according to claim 7 wherein
a plurality of transmission data sequences are produced using different coefficient sequences of a spreading
sequence and
at least one transmission data sequence selected from said transmission data sequences is used as the
pilot signal with other transmission data sequences used as transmission signals, further comprising the steps of:

finding multi-path characteristics from the reception signal of the pilot signal; and
removing the multi-path characteristics from the reception signal of the transmission signal using the multi-
path characteristics, which are found, to produce transmission data.

9. A data structure of a transmission signal comprising a transmission data sequence produced by cutting out transmission data, which is longer than the coefficient sequence, from an infinite-length signal produced by repeating
a finite-length signal, produced by multiplying transmission data by the coefficient sequence of a spreading sequence, an infinite number of times.

(a)    Data  b (b_0, b_1, · · ·, b_{M-1})

(b)  Sequence (a_0, a_1, ···, a_{N-1})  ⊗  (b_0, b_1, · · ·, b_{M-1})

(1, 0, ···, 0, j, 0,  ···,  0,
-1, 0, ···, 0-j, 0, ···, 0)

(c)

Fig. 1

$$\begin{bmatrix} 1 & 1 & 1 & 1 \\ 1 & j & -1 & -j \\ 1 & -1 & 1 & -1 \\ 1 & -j & -1 & j \end{bmatrix}$$

Fig. 2

Fig. 3

EP 1 542 372 A1

(a) Signal (A´,1) $\longrightarrow$ [Matched filter for A] $\xrightarrow{A\,f}$ 16 (x, x, ···, x, x, 1, 0, 0, 0, 1, 0, 0, 0, 1, 0x, x, ···, x, x)

(b) Signal (A´,1) $\longrightarrow$ [Multi-path transmission line $^{P}$] $\longrightarrow$ [Matched filter for A] $\xrightarrow{A\,f}$ 16 (x, x, ···, x, x, p3, p0, p1, p2, p3, p0, p1, x, x, x, x, ···, x, x)

(c) Signal (B´,j) $\longrightarrow$ [Matched filter for A] $\xrightarrow{A\,f}$ 16 (x, x, ···, x, x, 0, 0, 0, 0, 0, 0, 0, 0, 0, 0x, x, ···, x, x)

(d) Signal (A´,j) $\longrightarrow$ [Matched filter for B] $\xrightarrow{B\,f}$ 16 (x, x, ···, x, x, 0, 0, 0, 0, 0, 0, 0, 0, 0, 0x, x, ···, x, x)

(e) Signal (B´,j) $\longrightarrow$ [Multi-path transmission line $^{P}$] $\xrightarrow{B''}$ [Matched filter for A] $\xrightarrow{A\,f}$ 16 (x, x, ···, x, x, 0, 0, 0, 0, 0, 0, 0, 0, 0, 0x, x, ···, x, x)

(f) Signal (A´,j) $\longrightarrow$ [Multi-path transmission line] $\xrightarrow{A''}$ [Matched filter for B] $\xrightarrow{B\,f}$ 16 (x, x, ···, x, x, 0, 0, 0, 0, 0, 0, 0, 0, 0, 0x, x, ···, x, x)

(g) Signal (B´,j) $\longrightarrow$ [Matched filter for B] $\xrightarrow{B\,f}$ 4 (x, ···, x, −j, 0, 0, 0, 1, 0, 0, 0, j, 0, 0, 0, −1, x, ···, x)

*(P)*

(h) Signal (B´,j) $\longrightarrow$ [Multi-path transmission line $^{P}$] $\xrightarrow{B''}$ [Matched filter for B] $\xrightarrow{B\,f}$ 4 (···, x, x, x, x, −jp0, −jp1, −jp2, −jp3, p0, p1, p2, p3, jp0, jp1, jp2, jp3, x, x, x, ···)

Fig. 4

14

$$A_0 = (+++-++-+)$$

$$
\begin{array}{c}
+++-++-+ \\
+++-++-+ \\
+++-++-+ \\
\hline
1\ 2\ 3\ 1\ 1\ 1\ 1\ 1\ 0\ 1
\end{array}
$$

Fig. 5

# EP 1 542 372 A1

| | INTERNATIONAL SEARCH REPORT | International application No.<br>PCT/JP03/11018 |
|---|---|---|

**A. CLASSIFICATION OF SUBJECT MATTER**
Int.Cl$^7$ H04B1/707

According to International Patent Classification (IPC) or to both national classification and IPC

**B. FIELDS SEARCHED**

Minimum documentation searched (classification system followed by classification symbols)
Int.Cl$^7$ H04J13/00-13/06, H04B1/69-1/713

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Keisuke HIGUMA, Naoki SUEHIRO, Toshiaki IMOTO, Noriyoshi KUROYANAGI, 'Jikan Kakusan Singojo deno Multi Pass Tokusei Gyoretsu o Mochiita Kokoritsu Musen Shuhasu Riyo Hoshiki no Simulation', The Institute of Electronics, Information and Communication Engineers Gijutsu Kenkyu Hokoku, Vol.101, No.128, 22 June, 2001 (22.06.01), SST2001-20, pages 21 to 27 | 1-9 |
| A | ROBERT L. FRANK, 'Polyphase Complementary Codes', IEEE TRANSACTION ON INFORMATION THEORY, Vol.IT-26, No.6, November 1980 | 5 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 October, 2003 (01.10.03) | 14 October, 2003 (14.10.03) |

| Name and mailing address of the ISA/<br>Japanese Patent Office | Authorized officer |
|---|---|
| Facsimile No. | Telephone No. |

Form PCT/ISA/210 (second sheet) (July 1998)

16